# DEMANDE DE BREVET EUROPEEN

(11) **EP 1 246 138 A1**
(43) Date de publication de la demande: **02.10.2002**
(21) Numéro de dépôt: 02360100.8
(22) Date de dépôt: 22.03.2002
(51) Int. Cl.: G07C 11/00, G06F 17/60

(54) **Dispositif pour l'identification et la prise de rang de personnes dans une file d'attente**

(30) Priorité: 29.03.2001 FR 0104267
(71) Demandeur: Electronique et Systèmes Informatiques Industriels E.S.I.I. ayant pour sigle ESII, 34880 Laverune (FR)
(72) Inventeur: Richard, Jean-Pierre, 34570 Vailhauques (FR); Zirah, Joseph, 34000 Montpellier (FR)
(74) Mandataire: Rhein, Alain

(57) **Abrégé**

L'invention concerne un dispositif pour l'identification et la prise de rang de personnes.

Il comporte d'une part plusieurs parties distinctes, à savoir un poste de saisie (1) comprenant un moyen (12) apte à prendre une photographie de la personne à identifier et à orienter, et apte à être déclenché volontairement ou non par ladite personne lorsqu'elle y enregistre sa demande, et au moins un poste terminal (3 ; 4) comprenant un moyen (40) d'affichage de la photo ou analogue, et éventuellement des informations recueillies lors de l'enregistrement de la demande; et d'autre part un moyen (2) apte à gérer ces informations en sorte de les ordonner et de les diriger vers le poste terminal (3 ; 4) auquel elles sont destinées.

## Description

La présente invention a pour objet un dispositif pour l'identification et la prise de rang de personnes dans une file d'attente.

On connaît déjà des dispositifs permettant de gérer une file d'attente dans une administration ou dans un magasin par exemple.

Dans sa version la plus simple, un tel dispositif comporte un distributeur de tickets numérotés, les personnes en attente prélevant chacune un ticket et attendant que le numéro correspondant soit appelé de manière sonore et/ou visuelle.

Il existe différentes variantes plus ou moins sophistiquées d'un tel dispositif, qui permettent d'orienter plus précisément les personnes en attente, ce qui peut nécessiter une identification plus précise desdites personnes et de leurs besoins.

Cette identification peut être réalisée de plusieurs manières, soit par l'intermédiaire d'un hôte d'accueil interrogeant les personnes pour collecter les informations nécessaires à leur orientation, soit à partir d'informations déjà connues et stockées dans un fichier dont l'interrogation est déclenchée par l'introduction d'un code d'identification figurant par exemple sur une carte magnétique ou analogue.

Les applications de ces dispositifs sont très étendues, par exemple, la gestion des priorités d'affectation des agents aux services, la gestion et la mobilisation de renforts adéquats en fonction des temps d'attente et de l'affluence, la gestion des particularités des personnes permettant des choix de services et/ou des traitements différenciés.

Ces dispositifs ne permettent pas de faire face à tous les cas de figure en ce qui concerne la gestion de l'identification et la prise de rang de personnes.

Ainsi, à titre d'exemple, dans un grand magasin, il est souvent difficile de trouver dans un rayon un vendeur qui soit à la fois compétent dans le domaine choisi et immédiatement disponible pour pouvoir donner les renseignements recherchés.

Par ailleurs, s'il est aisé de faire respecter son ordre d'arrivée lorsque l'on fait la queue à un comptoir, cela est plus difficile dans le rayon d'un magasin, et il est fréquent de se faire devancer par une personne arrivée plus tard. Il est d'autre part, peu aisé de suivre un vendeur jusqu'à ce qu'il soit disponible.

De plus, il peut arriver que l'on s'aperçoive, après avoir attendu la disponibilité d'un vendeur, que celui-ci n'est pas capable de donner le renseignement désiré.

La présente invention a pour but de proposer un dispositif pour l'identification et la prise de rang de personnes qui permet de remédier aux divers inconvénients précités, tout en étant de conception et d'utilisation simples.

Le dispositif pour l'identification et la prise de rang de personnes selon l'invention, se caractérise essentiellement en ce qu'il comporte d'une part plusieurs parties distinctes, à savoir un poste de saisie comprenant un moyen apte à prendre une photographie de la personne à identifier et à orienter, et apte à être déclenché volontairement ou non par ladite personne lorsqu'elle y enregistre sa demande, et au moins un poste terminal comprenant un moyen d'affichage de ladite photographie, et éventuellement des informations recueillies lors de l'enregistrement de ladite demande; et d'autre part un moyen apte à gérer lesdites informations en sorte de les ordonner et de les diriger vers le poste terminal auquel elles sont destinées.

Selon une caractéristique additionnelle du dispositif selon l'invention, le poste de saisie comporte un moyen apte à enregistrer des données émises de manière sonore.

Selon une autre caractéristique additionnelle du dispositif selon l'invention, le poste de saisie comporte un moyen apte à enregistrer la sélection de la demande saisie par la personne sur un clavier ou analogue.

Selon un mode de réalisation particulier du dispositif selon l'invention, le poste de saisie consiste en un écran tactile.

Selon une autre caractéristique additionnelle du dispositif selon l'invention, il comporte des moyens aptes à distribuer à la personne demandeuse un ticket ou analogue mentionnant des éléments permettant d'identifier sa demande.

Selon une caractéristique additionnelle du dispositif selon l'invention, chaque poste terminal est associé à au moins un moyen avertisseur apte à prévenir le ou les opérateurs rattachés audit poste terminal, de l'enregistrement de nouvelles informations.

Selon une autre caractéristique additionnelle du dispositif selon l'invention, le ou les postes terminaux sont portables et sont reliés au poste de saisie par une transmission radio ou analogue.

Un tel dispositif peut trouver de nombreuses applications. Dans le cas précité d'un magasin, le client à la recherche d'un produit particulier et dont la demande a préalablement été enregistrée sur le poste de saisie du dispositif selon l'invention disposé par exemple à l'entrée du rayon concerné, peut être identifié visuellement par le vendeur compétent dans le domaine, et auquel aura été signalée la venue dudit client. Par ailleurs, le dispositif selon l'invention aura également ordonné les enregistrements des demandes en sorte que le vendeur pourra ordonner la prise en charge des clients.

Outre les moyens de prise de photographies, le poste de saisie de la demande peut présenter différents aspects. Il est ainsi possible que le poste de saisie consiste, de manière non limitative :
- soit en un écran associé à un clavier, un panneau sérigraphié avec boutons de sélection en regard de textes explicatifs,
- soit en un moniteur de visualisation présentant plusieurs alternatives avec de part et d'autre, en regard de chacune d'elles des boutons de sélection,
- soit, de manière avantageuse, en un écran tactile ou similaire.

On notera qu'il est également possible que le ou les postes d'identification soient identiques au poste de saisie, ou du moins qu'ils présentent les mêmes équipements.

Afin de permettre que la personne demandeuse puisse enregistrer sa demande de manière plus aisée, le poste de saisie du dispositif selon l'invention comporte un moyen d'enregistrement sonore, en sorte que ladite personne peut dicter sa demande ou certains éléments de celle-ci, ou encore des éléments permettant son identification, son nom par exemple. Il est par ailleurs possible que le poste de saisie soit également équipé de moyens d'émission du son, de manière que la personne demandeuse puisse être guidée ou engager une conversation soit avec un opérateur, soit avec une boîte vocale.

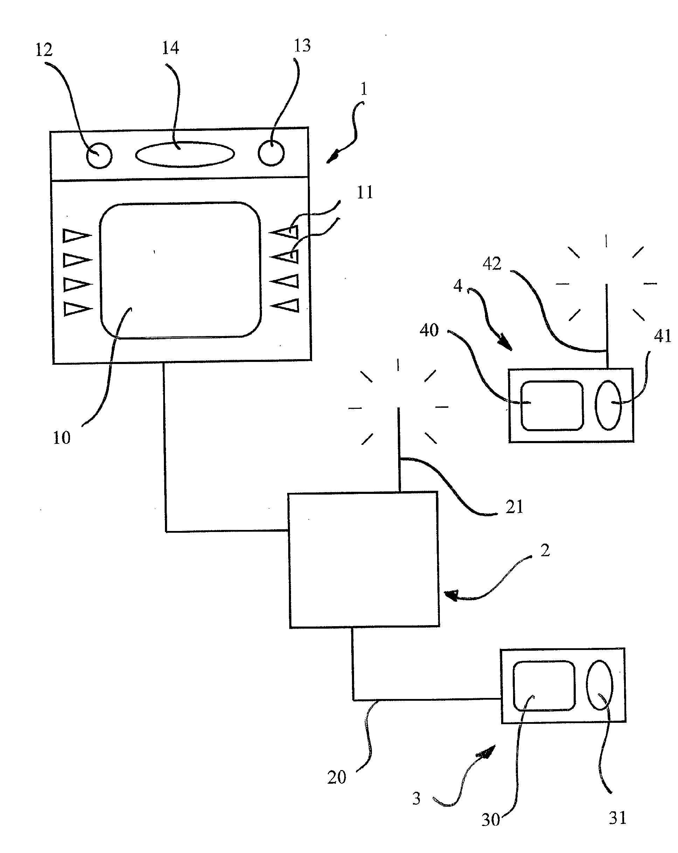

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé, la figure unique représente une vue schématique d'un dispositif pour l'identification et la prise de rang de personnes selon l'invention.

Sur cette figure on peut voir qu'un dispositif pour l'identification et la prise de rang de personnes selon l'invention comporte un poste de saisie 1 relié à une centrale de gestion 2, qui peut éventuellement être intégrée au poste de saisie 1, et des postes terminaux 3 et 4.

Le poste de saisie 1 comprend un écran 10 de part et d'autre duquel sont répartis des boutons 11 permettant à l'utilisateur de valider ou non les informations fixes ou qui défilent sur cet écran 10.

Le poste de saisie comprend également un appareil photographique dont n'est représenté que l'objectif 12, ainsi qu'un moyen d'enregistrement du son dont n'est représenté que le microphone 13, ainsi qu'un moyen d'émission du son tel qu'un haut-parleur 14.

Les postes terminaux 3 et 4 comportent chacun un moyen de restitution d'une image photographique tel qu'un écran, respectivement 30 et 40, ainsi qu'un moyen d'émission du son tel qu'un haut-parleur, respectivement 31 et 41.

Les postes terminaux 3 et 4 sont reliés à la centrale de gestion 2, selon deux modes de réalisation différents, le poste terminal 3 lui est relié par l'intermédiaire de moyens filaires 20, tandis que le poste terminal 4 l'est par l'intermédiaire de moyens radio ou analogue, à cet effet la centrale de gestion 2 comporte un moyen émetteur 21, tandis que le poste terminal comporte un moyen récepteur 42.

Le poste de saisie 1 permet d'enregistrer la demande ce qui provoque la prise d'une photographie du demandeur. Pour réaliser l'enregistrement de sa demande le demandeur appuie sur les boutons 11 en fonction de ce qui apparaît sur l'écran 10. On notera que l'écran 10 et les boutons 11 peuvent avantageusement être remplacés par un écran tactile.

Le haut-parleur 14 du poste de saisie 1 permet de donner des indications sonores au demandeur, par exemple sur la façon d'utiliser le dispositif selon l'invention, par l'intermédiaire d'une boîte vocale.

Le microphone 13 permet essentiellement de transmettre et d'enregistrer le nom du demandeur afin de personnaliser l'accueil, il peut également permettre l'engagement d'une conversation avec un opérateur, ou une personne attachée à un poste terminal, ce dernier étant alors équipé d'un moyen de transmission du son.

On notera que dans une configuration prévoyant un échange entre les postes terminaux 3 ou 4 et le poste de saisie 1, il convient de prévoir des moyens émetteurs au niveau des postes terminaux 3 et 4 et des moyens récepteurs au niveau du poste de saisie.

En fonction de la nature de la demande, les informations concernant la personne demandeuse sont transmises à un poste terminal 3, 4 ou autres, non représentés, en sorte que l'utilisateur de ce poste terminal 3, 4 ou autres, puisse visualiser sur l'écran 30 ou 40, la photographie de la personne demandeuse, et éventuellement connaître son nom qui peut soit être émis de manière sonore au travers du haut-parleur 31 ou 41, soit s'afficher sur l'écran 30 ou 40 après transcription, ce qui lui permet d'aller au-devant de la personne demandeuse.

On notera également qu'il est prévu de pouvoir adjoindre à un poste terminal 3 un moyen avertisseur, de préférence portable de type bip, apte à prévenir le ou les opérateurs rattachés au poste terminal 3, de l'enregistrement de nouvelles informations sur le poste de saisie 1.

## Revendications

1. Dispositif pour l'identification et la prise de rang de personnes dans une file d'attente, **caractérisé en ce qu'**il comporte d'une part plusieurs parties distinctes, à savoir un poste de saisie (1) comprenant un moyen (12) apte à prendre une photographie de la personne à identifier et à orienter, et apte à être déclenché volontairement ou non par ladite personne lorsqu'elle y enregistre sa demande, et au moins un poste terminal (3 ; 4) comprenant un moyen (40) d'affichage de ladite photographie, et éventuellement des informations recueillies lors de l'enregistrement de ladite demande; et d'autre part un moyen (2) apte à gérer lesdites informations en sorte de les ordonner et de les diriger vers le poste terminal (3 ; 4) auquel elles sont destinées.

2. Dispositif selon la revendication 1, **caractérisé en ce que** le poste de saisie (1) comporte un moyen (13) apte à enregistrer des données émises de manière sonore.

3. Dispositif selon la revendication 2, **caractérisé en ce que** le poste de saisie (1) comporte des moyens (14) d'émission du son, en sorte que la personne demandeuse puisse être guidée ou engager une conversation soit avec un opérateur, soit avec une boîte vocale.

4. Dispositif selon l'une quelconque des revendications précédentes, **caractérisé en ce que** le poste de saisie (1) comporte un moyen apte à enregistrer des données saisies par ladite personne sur un clavier ou analogue.

5. Dispositif selon l'une quelconque des revendications précédentes, **caractérisé en ce que** le poste de saisie (1) consiste en un écran tactile.

6. Dispositif selon l'une quelconque des revendications précédentes, **caractérisé en ce qu'**il comporte des moyens aptes à distribuer à la personne demandeuse un ticket ou analogue mentionnant des éléments permettant d'identifier sa demande.

7. Dispositif selon l'une quelconque des revendications précédentes, **caractérisé en ce que** chaque poste terminal (3) est associé à au moins un moyen avertisseur apte à prévenir le ou les opérateurs rattachés

8. Dispositif selon l'une quelconque des revendications 1 à 6, **caractérisé en ce que** le ou les postes terminaux (4) sont portables et sont reliés au poste de saisie par une transmission radio ou analogue.
